# DEMANDE DE BREVET EUROPEEN

(11) **EP 3 453 259 A1**
(43) Date de publication de la demande: **13.03.2019**
(21) Numéro de dépôt: 18306188.6
(22) Date de dépôt: 10.09.2018
(51) Int. Cl.: A21C 9/08, B65G 47/58

(54) **CONVOYEUR POUR BANDELETTES DE PÂTE**

(30) Priorité: 11.09.2017 FR 1758362
(71) Demandeur: Strattec (Société par Actions Simplifiée), 67700 Saverne (FR)
(72) Inventeur: ZORN, Bernard, 67700 SAVERNE (FR)
(74) Mandataire: Cabinet Nuss

(57) **Abrégé**

La présente invention a pour objet un convoyeur (1) pour bandelettes de pâte (4a, 4b, 4c) juxtaposées issues d'un découpage longitudinal d'une bande pâte laminée, caractérisé en ce que le convoyeur (1) présente au moins une structure principale (2) sensiblement plan et comprend une pluralité de lignes de course (3a, 3b, 3c) propres à chacune des bandelettes de pâte (4a, 4b, 4c) juxtaposées, au moins une des lignes de course (3a, 3b, 3c) comprenant un passage traversant (5a, 5b) du plan de la structure principale (2), le passage traversant (5a, 5b) étant de dimensions adaptées pour être traversé par la bandelette de pâte (4a) en déplacement sur la ligne de course (3a).

## Description

La présente invention se rapporte au domaine des dispositifs de gestion de production industrielle d'aliments à base de pâte et plus

particulièrement au domaine des dispositifs de gestion de bandelettes de pâte dans le cadre de la boulange industrielle.

Dans le cadre d'une production industrielle de pains, la pâte est laminée avant d'être coupée longitudinalement puis guillotinée afin d'obtenir des pâtons aux dimensions souhaitées et destinés au façonnage et à la cuisson. La pâte laminée et découpée longitudinalement participe ainsi à la production de plusieurs bandelettes destinées à alimenter, chacune simultanément, une station de façonnage respective. Sur la chaine de production, une seule station de laminage permet le fonctionnement de plusieurs stations de façonnage.

Aussi, actuellement, une fois les bandelettes de pâte formées, celles-ci sont espacées par un tapis ou des courroies transporteuses divergentes, puis sont guillotinées avant d'être, sous la forme de pâtons, convoyées perpendiculairement au sens d'amenée du tapis ou des courroies transporteuses, vers une ou plusieurs stations de façonnage.

Cependant, le transport des bandelettes de pâte vers les stations de façonnage sous la forme de pâtons impose la réalisation de pâtons de dimensions identiques préalablement à l'opération de transport et ne permet pas une production de pâtons de formes et dimensions différentes selon la station de façonnage vers laquelle ils sont orientés.

La réalisation d'une découpe des bandelettes de pâte en pâtons de dimensions requises directement au niveau de chacune des stations de façonnage impose alors un transport de bandelettes de pâte continues et espacées depuis une station de laminage vers une ou plusieurs stations de façonnage. Le convoyage peut ainsi faire intervenir différentes bandes transporteuses, droites ou courbes selon l'espace d'encombrement disponible. Toutefois, le transport de bandelettes de pâte continues parallèles et espacées par des bandes transporteuses courbes est à l'origine d'une déformation, par étirement ou tassement, des bandelettes de pâte transportées ainsi qu'à un rapprochement des bandelettes de pâte entre elles. Cette altération des bandelettes de pâte rend alors complexe la réalisation d'une production de pâtons uniformes au niveau d'une même station de façonnage. De plus, la modification de l'espacement des bandelettes de pâte au cours du transport n'autorise pas de profiter en l'état de l'opération écartement des bandelettes de pâte effectuée au niveau de la station de laminage. De sorte que, lors du façonnage voire de la cuisson, cette séparation insuffisante présente un risque de contact entre deux pâtons juxtaposées. Ce contact risque alors de fixer ensemble les deux pâtons qui, une fois réunis, peuvent altérer la chaîne de production ou former une marque, après leur cuisson, sous la forme d'une absence de croûte ou d'un défaut de cuisson.

La présente invention a pour but de pallier ces inconvénients en proposant un mécanisme qui permet une séparation des bandelettes de pâte continues selon un espace d'écartement ajustable conjointement à leur dépose sur un ou plusieurs moyens de transport vers des stations de façonnage dédiés sans altération de cet écartement.

L'invention a ainsi pour objet un convoyeur pour bandelettes de pâte juxtaposées issues d'un découpage longitudinal d'une bande pâte laminée, caractérisé en ce que le convoyeur présente au moins une structure principale sensiblement plan et comprend une pluralité de lignes de course propres à chacune des bandelettes de pâte juxtaposées, au moins une des lignes de course comprenant un passage traversant du plan de la structure principale, le passage traversant étant de dimensions adaptées pour être traversé par la bandelette de pâte en déplacement sur la ligne de course.

L'invention porte également sur un système de gestion de bandelettes de pâte issues d'un découpage longitudinal d'une bande de pâte laminée, caractérisé en ce que le système comprend :
- un premier tapis transporteur d'amenée de bandelettes de pâtes,
- un convoyeur selon l'invention, la structure principale du convoyeur étant positionnée en aval dans le prolongement et de niveau avec le premier tapis transporteur,
- un second tapis transporteur de récupération de bandelettes de pâtes, le second tapis transporteur étant positionné en dessous du convoyeur de sorte que le tapis transporteur soit à la verticale d'au moins un passage traversant du plan de la structure principale du convoyeur.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

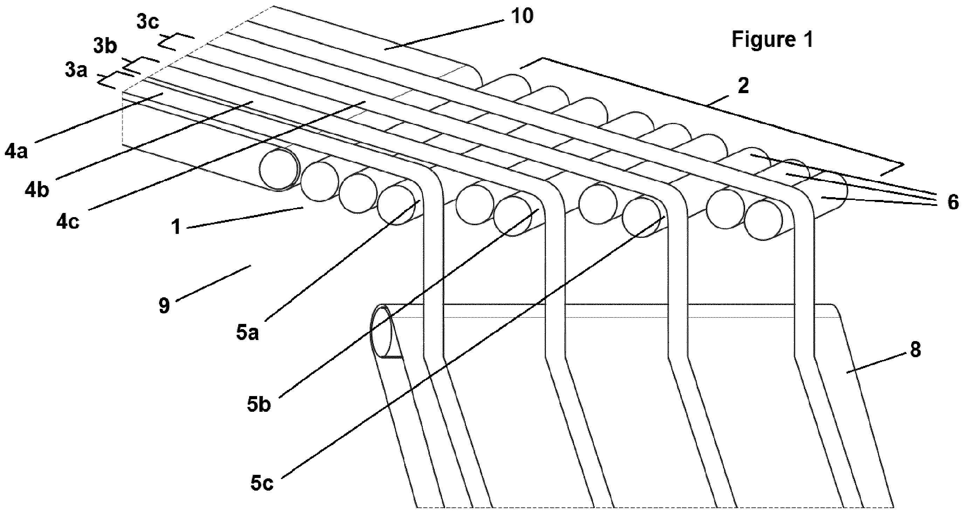

- la figure 1 se rapporte à une représentation schématique d'un exemple de convoyeur de l'invention intégré dans un système de gestion de bandelettes de pâte,

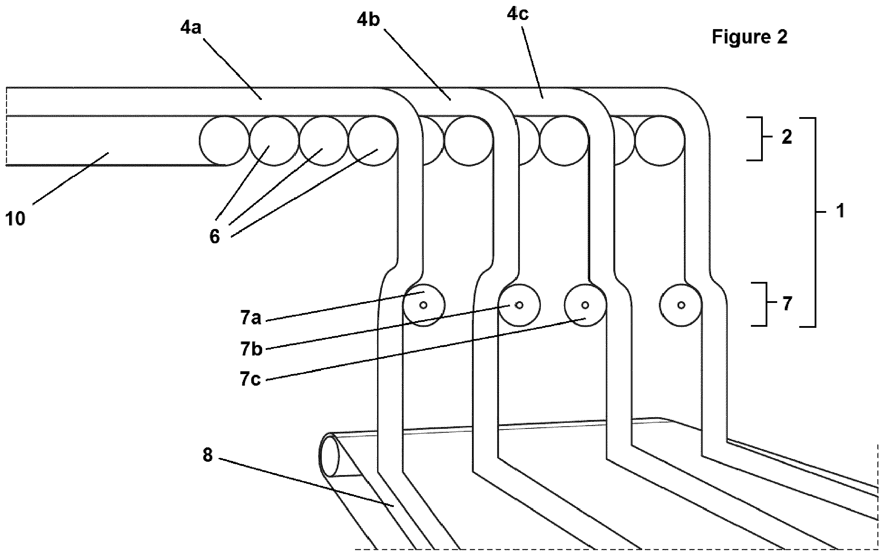

- la figure 2 se rapporte à une représentation schématique d'un exemple de système de gestion de bandelettes de pâte selon une vue en section,
- la figure 3 se rapporte à une représentation schématique d'un autre exemple de système de gestion de bandelettes de pâte selon une vue supérieure.

La présente invention repose sur un convoyeur 1, 1bis pour bandelettes de pâte 4a, 4b, 4c juxtaposées issues d'un découpage longitudinal d'une bande pâte laminée, caractérisé en ce que le convoyeur 1, 1bis présente au moins une structure principale 2 sensiblement plan et comprend une pluralité de lignes de course 3a, 3b, 3c propres à chacune des bandelettes de pâte 4a, 4b, 4c juxtaposées, au moins une des lignes de course 3a, 3b, 3c comprenant un passage traversant 5a, 5b du plan de la structure principale 2, le passage traversant 5a, 5b étant de dimensions adaptées pour être traversé par la bandelette de pâte 4a en déplacement sur la ligne de course 3a.

Selon une construction particulière et préférée du convoyeur 1, Ibis, les lignes de course 3a, 3b, 3c respectives des différentes bandelettes de pâte 4a, 4b, 4c juxtaposées sont disposées de façon rectiligne et parallèle entre elles au niveau de la structure principale 2. L'utilisation d'un tel convoyeur 1, Ibis de l'invention permet, grâce à un passage traversant 5a positionné stratégiquement sur une ligne de course 3a, de définir une position pour la séparation de la bandelette de pâte 4a qui s'y rapporte par rapport aux autres bandelettes 4b, 4c transportées par le convoyeur 1, 1bis. La position du passage traversant 5a le long de la ligne de course 3a permet de définir une position de dépose de la bandelette 4a sur une nouvelle surface par rapport aux autres bandelettes 4b, 4c, cette position de dépose étant située à la verticale du passage traversant 5a. La dépose de la bandelette de pâte 4a est réalisée sur une seconde surface appartenant à un transporteur de récupération 8 de sorte que la position de dépose située à la verticale du passage traversant 5a réalise le point de départ d'une nouvelle ligne de course pour la bandelette 4a à un niveau plus bas. Par ailleurs, le déplacement de la bandelette de pâte 4a entre le passage traversant 5a du plan de la structure principale 2 du convoyeur 1, Ibis la surface d'un transporteur de récupération 8 est réalisé par un déplacement depuis un point haut vers un point bas. Ce déplacement par simple gravité, opéré préférentiellement le long d'une faible hauteur, n'altère pas la forme longitudinale de la bandelette de pâte 4a.

Selon une particularité préférée de construction, le convoyeur 1, Ibis de l'invention est caractérisé en ce que, au moins deux lignes de course 3a comprenant un passage traversant 5a, 5b respectif du plan de la structure principale 2, les différents passages traversant du convoyeur 1, Ibis sont situés à des positions différentes sur le convoyeur 1, 1bis. Selon cette particularité technique, les lignes de course 3a, 3b sur la structure principale 2 du convoyeur 1, 1bis étant parallèles, les passages traversant 5a, 5b respectifs sont localisées à des positions différentes le long de ces lignes de course 3a, 3b. Ces différentes lignes de course 3a, 3b, 3c arrangées parallèlement entre elles, présentent ainsi des longueurs respectives différentes. Aussi, le déplacement des différentes bandelettes de pâte 4a, 4b étant réalisée le long de lignes de course 3a, 3b orientées parallèle entre elles sur la structure principale 2 du convoyeur 1, 1bis, chacune des bandelettes de pâte 3a, 3b quitte cette structure principale 2 au niveau d'un passage traversant 5a, 5b respectif pour se déposer à la verticale des passages traversant 5a, 5b, sur la surface d'un transporteur de récupération 8, commun ou différent, positionné en contrebas. La position des différents passages traversant 5a, 5b entre eux permet ainsi de définir une position de dépose des différentes bandelettes de pâte 4a, 4b, l'une par rapport à l'autre, sur la surface d'un transporteur de récupération 8 en contrebas. Aussi, l'espacement entre les passages traversant 5a, 5b permet définir un écartement des bandelettes de pâte 4a, 4b au niveau de leur dépose, sous réserve que l'axe de déplacement du transporteur de récupération 8 soit différent de l'axe passant par les points de dépose des bandelettes de pâte 4a, 4b.

La succession des passages traversant 5a, 5b, 5c de chacune des lignes de course 3a, 3b, 3c à différentes positions sur la longueur de la structure principale 2 du convoyeur 1, 1bis permet de réaliser une dépose respective des bandelettes de pâte 3a, 3b, 3c sur la surface d'un transporteur de récupération 8 selon un écartement prédéterminé en fonction de l'espacement des différents passages traversant 5a, 5b. Selon un arrangement préféré qui n'est pas limitatif de l'invention, les passages traversant 5a, 5b, 5c des lignes de course 3a, 3b, 3c sur la longueur de la structure principale 2 du convoyeur 1, 1bis sont alignés sur un même axe, cet axe étant non nul avec une droite perpendiculaire aux différentes lignes de course 3a, 3b, 3c.

Selon une particularité de construction, le convoyeur 1 est caractérisé en ce que au moins une ligne de course 3a, 3b, 3c est formée par des rouleaux ou galets 6 montés sur axes et arrangés pour participer au déplacement d'une bandelette de pâte 4a, 4b, 4c et en ce que le passage traversant 5a, 5b, 5c d'au moins une des lignes de course 3a, 3b, 3c est alors réalisé par l'absence d'un ou de plusieurs rouleaux ou galets le long de la ligne de course 3a, 3b, 3c. Selon cette particularité de construction, la structure principale 2 du convoyeur 1 est réalisée par une pluralité de galets ou rouleaux 6 juxtaposés parallèlement entre eux et montés sur des axes disposés perpendiculairement aux axes des lignes de course 3a, 3b, 3c. Le passage traversant 5a, 5b positionné à l'extrémité des lignes de course 3a, 3b, 3c détermine la position de la fin de la ligne de course 3a, 3b, 3c sur la structure principale 2 du convoyeur 1.

Selon une spécificité de cette particularité de construction, les rouleaux ou galets 6 sont montés escamotables sur la structure principale 2 de sorte que la longueur de la ligne de course 3a, 3b, 3c est ajustable en fonction de l'écartement recherché entre deux passages traversant 5a, 5b. La réalisation d'un passage traversant 5a, 5b du plan de la structure principale 2, en fin de course 3a, 3b, 3c peut alors être réalisé par une absence de galet ou rouleau 6 sur la structure principale 2, le long de l'axe d'une ligne de course 3a, 3b, 3c. Cette absence de galet ou rouleau 6 peut ainsi être obtenue en retirant un ou plusieurs des rouleaux ou galets 6 escamotables de la structure principale 2. Selon un exemple de construction, lorsque les rouleaux ou galets 6 sont partagés par les différentes lignes de course 3a, 3b, 3c parallèles et juxtaposées en étant positionnés transversalement à ces lignes de course 3a, 3b, 3c, l'escamotage des rouleaux ou galets 6 est obtenu grâce à un coulissement ces derniers 6 le long de leur axe de rotation. Ainsi, la translation d'un ou plusieurs rouleaux ou galets 6 le long de leurs axe permet de retirer ces rouleaux ou galets 6 au niveau d'une ou de plusieurs lignes de course 3a, 3b, 3c juxtaposées pour réaliser un ou plusieurs passages traversant 5a, 5b du plan de la structure principale 2.

Selon une autre spécificité de cette particularité, un ou plusieurs des rouleaux ou galets qui réalisent la ligne de course 3a, 3b, 3c du convoyeur 1 sont montés motorisés de façon à entraîner en déplacement une ou plusieurs des bandelettes de pâte 4a, 4b, 4c qui sont portées par le convoyeur 1.

Selon une particularité de construction alternative aux rouleaux ou galets 6, le convoyeur 1 est caractérisé en ce que au moins une ligne de course 3a, 3b, 3c est formée par au moins un tapis transporteur arrangé pour participer au déplacement d'une bandelette de pâte 4a, 4b, 4c et en ce que le passage traversant 5a, 5b d'au moins une des lignes de course 3a, 3b, 3c est alors réalisé par la fin de course 3a, 3b, 3c du tapis transporteur. Le tapis transporteur qui correspond à une ligne de course présente alors préférentiellement la forme d'une bande transporteuse. Aussi, selon cette construction, la fin de course du tapis transporteur ou de la bande transporteuse qui forme la ligne de course 3a, 3b, 3c définit le point de passage traversant 5a, 5b du plan de la structure principale 2. Lorsque le convoyeur 1 est réalisé par une pluralité de bandes transporteuses disposées parallèlement entre eux, pour le déplacement d'une pluralité de bandelettes de pâte 4a, les longueurs de chacune des lignes de course sont indépendantes et uniquement tributaires de la longueur de la bande transporteuse concernée. Cette particularité de construction permet ainsi la réalisation d'une ligne de course de plus courte longueur positionnée entre deux lignes de course de plus grande longueur.

Selon une construction préférentielle, le convoyeur 1, 1bis comprend au moins une structure secondaire formant un élément de déviation 7 disposé sous le passage traversant 5a, 5b, 5c d'au moins une des lignes de course 3a, 3b, 3c, l'élément de déviation 7 étant positionné à la verticale du passage traversant 5a, 5b, 5c pour écarter la chute d'une bandelette de pâte 4a, 4b, 4c de cette verticale. Cet élément de déviation 7 spécifique au passage traversant 5a, 5b, 5c de chaque ligne de course 3a, 3b, 3c permet ainsi un ajustement de l'écartement de chaque bandelette de pâte 4a, 4b, 4c. L'élément de déviation 7 qui forme cette structure secondaire est monté mobile et positionné en dessous de la structure principale 2, à la verticale du passage traversant 5a, 5b par lequel la bandelette de pâte 4a, 4b, 4c destinée à être déviée par l'élément de déviation 7, quitte la ligne de course 3a, 3b, 3c de la structure principale 2. Cet élément de déviation 7 est positionné à la verticale du passage de traversant 5a, 5b de façon à permettre une modification du déplacement de la bandelette de pâte 4a, 4b, 4c depuis la structure principale 2 vers un élément de récupération positionné en contrebas. En permettant une modification du déplacement vertical de la bandelette de pâte 4a, 4b, 4c, l'élément de déviation 7 permet ainsi un ajustement de la position de dépose par rapport à la verticale du passage de traversant 5a, 5b. Aussi, en complément des passages traversant 5a, 5b positionnés sur des lignes de course 3a, 3b, 3c de la structure principale 2, l'élément de déviation 7 permet un réglage fin de l'écartement des bandelettes de pâte 4a, 4b, 4c lors de leur dépose.

Selon une spécificité de construction de cet élément de déviation 7, celui-ci est réalisé par une rampe dont l'angle d'inclinaison est monté mobile et réglable de sorte que la partie supérieure de la rampe est positionnée à la verticale du passage traversant 5a, 5b, 5c. Selon une particularité de construction, la rampe de déviation est formée par une goulotte ou une gouttière de largeur au moins supérieure à la largeur d'une bandelette de pâte 4a, 4b, 4c. Ainsi, la bandelette de pâte 4a, 4b, 4c se déplace verticalement depuis le passage traversant 5a, 5b, 5c jusqu'à la rampe où la bandelette de pâte 4a, 4b, 4c est déviée jusqu'à la partie inférieure de la rampe pour être alors positionnée à la verticale de la position de dépose de la bandelette de pâte 4a, 4b, 4c sur la surface du transporteur de récupération 8.

Selon un exemple de construction, la rampe est montée pivotante autour d'un axe horizontal orienté perpendiculairement à l'axe de la ligne de course 3a, 3b, 3c de la structure principale 2. Pour ce faire, la rampe est montée mobile en pivotement autour d'un axe monté fixe avec la structure principale 2 du convoyeur 1, Ibis. Selon un autre exemple de construction, la rampe est montée mobile en translation le long d'un axe horizontal orienté perpendiculairement à l'axe de la ligne de course 3a, 3b, 3c de la structure principale 2. Pour ce faire, la rampe de déviation est montée mobile sur un rail monté fixe avec la structure principale 2 du convoyeur 1, Ibis. Grâce à ces deux exemples de construction, la partie inférieure de la rampe est montée mobile le long d'un axe perpendiculaire à l'axe de la ligne de course 3a, 3b, 3c de la structure principale 2. Cette partie inférieure de la rampe se trouve alors positionnée à la verticale de la position de dépose de la bandelette de pâte 4a, 4b, 4c sur la surface du transporteur de récupération 8. Selon une spécificité de construction, la partie inférieure de la rampe se trouve alors positionnée au niveau de la position de dépose de la bandelette de pâte 4a, 4b, 4c sur la surface du transporteur de récupération 8.

Selon une spécificité alternative de construction de l'élément de déviation 7, celui-ci est réalisé par au moins un rouleau ou galet 7a, 7b, 7c monté fou et dont la position est ajustable pour écarter la chute d'une bandelette de pâte 4a, 4b, 4c de la verticale du passage traversant 5. Le rouleau ou galet 7a, 7b, 7c est arrangé pour comporter au moins une portion de là la partie supérieure de sa périphérie qui est positionnée à la verticale du passage traversant 5a, 5b, 5c de sorte que la bandelette de pâte 4a, 4b, 4c soit écartée de la verticale du passage traversant 5a, 5b, 5c en longeant vers le bas la partie supérieure de la périphérie du rouleau ou galet 7a, 7b, 7c jusqu'à la position la plus latérale de la périphérie du rouleau ou galet 7a, 7b, 7c. De cette position la plus latérale, la bandelette de pâte 4a, 4b, 4c se trouve alors positionnée à la verticale de la position de dépose sur la surface du transporteur de récupération 8. De façon complémentaire, le montage fou du rouleau ou galet 7a, 7b, 7c permet par rotation de celui-ci d'entrainer en déplacement la bandelette de pâte 4a, 4b, 4c depuis la partie supérieure de la périphérie du rouleau ou galet 7a, 7b, 7c où la bandelette 4a, 4b, 4c entre en contact avec le rouleau ou galet 7a, 7b, 7c vers la position la plus latérale de la périphérie du rouleau ou galet 7a, 7b, 7c.

Le rouleau ou galet 7a, 7b, 7c est positionné de façon ajustable par rapport au passage traversant 5. Selon un exemple de construction de cet ajustement, l'axe du rouleau ou galet 7a, 7b, 7c est monté pivotant autour d'un axe horizontal orienté selon l'axe de la ligne de course 3a, 3b, 3c de la structure principale 2. Pour ce faire, l'axe du rouleau ou galet 7a, 7b, 7c est monté mobile en pivotement autour d'un axe monté fixe avec la structure principale 2 du convoyeur 1. Selon un autre exemple de construction, l'axe du rouleau ou galet 7a, 7b, 7c est monté mobile en translation le long d'un axe horizontal orienté perpendiculairement à l'axe de la ligne de course 3a, 3b, 3c de la structure principale 2. Pour ce faire, l'axe du rouleau ou galet 7a, 7b, 7c est monté mobile sur un rail monté fixe avec la structure principale 2 du convoyeur 1, Ibis. Grâce à ces exemples de construction, la partie la plus latérale de la périphérie du rouleau ou galet 7a, 7b, 7c qui définit l'axe vertical de dépose de la bandelette de pâte 4a, 4b, 4c sur la surface du transporteur de récupération 8 est ajustable le long d'un axe perpendiculaire à l'axe de la ligne de course 3a, 3b, 3c de la structure principale 2.

De façon préférentielle, le mécanisme de déplacement de l'élément de déviation 7, quel que soit ce mécanisme de déplacement, est associé à un mécanisme de maintien ou de blocage de l'élément de déviation 7 en position. Ce mécanisme de maintien/blocage en position de l'élément de déviation 7 permet ainsi de conserver, avec cet élément de déviation 7, un ajustement de la distance d'écartement par rapport à la verticale du passage traversant 5.

De façon préférentielle, les différents éléments et pièces destinés à être en contact avec la pâte, sous forme de bandelette ou autre, comprennent un revêtement qui limite, voire empêche, l'adhésion de la pâte à leur surface. Ce revêtement permet ainsi de faciliter le déplacement des bandelettes de pâte 4a, 4b, 4c au travers de l'ensemble du convoyeur 1, Ibis de l'invention.

L'invention porte également sur un système de gestion 9 de bandelettes de pâte 4a, 4b, 4c qui intègre un convoyeur 1, 1bis de l'invention. Ainsi, de façon préférentielle, le système de gestion 9 de bandelettes de pâte 4a, 4b, 4c issues d'un découpage longitudinal d'une bande de pâte laminée, caractérisé en ce que le système 9 comprend :
- un premier tapis transporteur 10 d'amenée de bandelettes de pâte 4a, 4b, 4c,
- un convoyeur 1, Ibis selon l'invention, la structure principale 2 du convoyeur 1 étant positionnée en aval dans le prolongement et de niveau avec le premier tapis transporteur 10,
- un second tapis transporteur 8 de récupération de bandelettes de pâte 4a, 4b, 4c, le second tapis transporteur 8 étant positionné en dessous du convoyeur 1, 1bis de sorte que le tapis transporteur 10 soit à la verticale d'au moins un passage traversant 5a, 5b, 5c du plan de la structure principale 2 du convoyeur 1, 1bis.
Ainsi, dans le système 9 de l'invention, le convoyeur 1 se trouve intégré de façon à effectuer une opération d'écartement des bandelettes de pâte 4a, 4b, 4c entre elles entre le premier tapis transporteur 10 d'amenée de ces bandelettes 4a, 4b, 4c et le second tapis transporteur 8 de récupération des bandelettes de pâte 4a, 4b, 4c en position écartées.

Selon une particularité de construction, le système 9 de gestion de l'invention est caractérisé en ce que l'axe du second tapis transporteur 8 forme un angle non-nul par rapport à l'axe du convoyeur 1, Ibis et/ou du premier tapis transporteur 10. Lors de l'aménagement du système 9, l'angle d'inclinaison de l'axe du tapis transporteur 8 de récupération par rapport à l'axe d'alignement d'au moins deux passages traversant 5a, 5b, 5c du plan de la structure principale 2 du convoyeur 1 est un paramètre qui entre également en compte dans la caractérisation de l'écartement des bandelettes de pâte 4a, 4b, 4c. Ainsi, plus l'axe du tapis transporteur 8 de récupération s'écarte de l'axe d'alignement d'au moins deux passages traversant 5a, 5b, 5c du plan de la structure principale 2 du convoyeur 1, Ibis, plus l'écartement entre les bandelettes de pâte 4a, 4b, 4c est important. Aussi, de façon préférée, afin d'obtenir un écartement maximal entre les bandelettes de pâte 4a, 4b, 4c, l'axe du tapis transporteur 8 de récupération est orienté perpendiculairement à l'axe d'alignement d'au moins deux passages traversant 5a, 5b, 5c du plan de la structure principale 2 du convoyeur 1.

Selon une autre particularité de construction, le système 9 de gestion est caractérisé en ce que, le convoyeur 1 comprenant au moins une ligne de course 3a, 3b, 3c sans passage traversant 5a, 5b, 5c du plan de la structure principale 2 du convoyeur 1, Ibis, le système de gestion 9 comprend également un troisième tapis transporteur 11 positionné en aval dans le prolongement et de niveau avec la structure principale 2 du convoyeur 1, Ibis. Selon un tel arrangement du système 9 de gestion, le convoyeur 1, Ibis de l'invention permet d'effectuer une séparation entre, d'une part, un premier ensemble de bandelettes de pâte 4a, 4b, 4c qui sont déposée et écartées sur le second tapis transporteur 8 de récupération et, d'autre part, un second ensemble de bandelettes de pâtes 4a, 4b, 4c qui sont transférées sur le troisième tapis transporteur 11.

Selon une spécificité de mise en oeuvre de cette particularité de construction du système 9 de gestion, le convoyeur 1, 1bis comprend des lignes de course 3a, 3b, 3c sans passage traversant et des lignes de course 3a, 3b, 3c avec passage traversant 5a, 5b, 5c alternativement juxtaposées. Avec un tel aménagement du système 9 de gestion, le premier ensemble de bandelettes de pâte 4a, 4b, 4c est déposé sur le second tapis transporteur 8 de récupération par l'intermédiaire du convoyeur 1, Ibis de l'invention avec un écartement gérée par le convoyeur 1, Ibis, tandis que le second ensemble de bandelettes de pâte 4a, 4b, 4c transféré sur le troisième tapis transporteur 11 présente un espacement entre deux bandelettes de pâte 4a, 4b, 4c consécutives qui correspond à au moins la largeur d'une bandelettes de pâte 4a, 4b, 4c. Cet espacement obtenue entre deux bandelettes de pâte 4a, 4b, 4c sur le troisième tapis transporteur 11 correspond à une bandelette de pâte intermédiaire déposée sur le second tapis transporteur 8 de récupération par l'intermédiaire du convoyeur 1, Ibis.

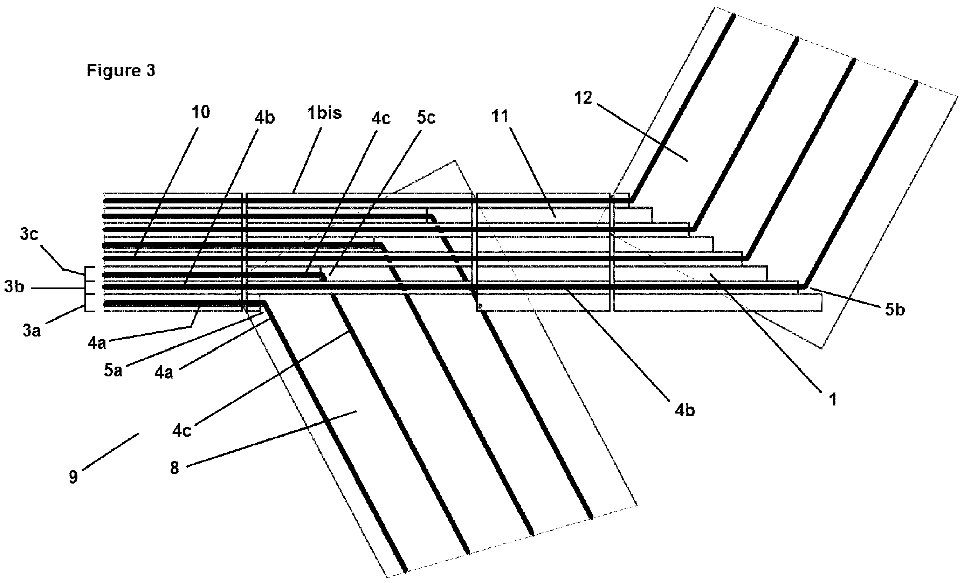

A titre d'exemple, le système 9 de gestion représenté schématiquement sur la figure 3 illustre un premier convoyeur Ibis alimenté par un premier tapis transporteur 10, de type tapis plein uniforme sur sa largeur, en bandelettes de pâte 4a, 4b, 4c qui dépose un premier ensemble de bandelettes écartées sur un second tapis transporteur 8 de récupération. Un second ensemble de bandelettes étant transféré sur un troisième tapis transporteur 11, de type tapis plein uniforme sur sa largeur. Ce troisième tapis transporteur 11 alimente un second convoyeur 1 de l'invention avec le second ensemble de bandelettes de sorte que ces bandelettes soient déposées écartées sur un quatrième tapis transporteur 12 pour récupération. A titre d'illustration, les constructions de chacun des convoyeurs 1, 1bis du système représenté schématiquement sont différentes. Le premier convoyeur Ibis peut être réalisé avec des bandes transporteuses pour chaque ligne de course tandis que le second convoyeur 1 est réalisé par des rouleaux ou galets.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Convoyeur (1, 1bis) pour bandelettes de pâte (4a, 4b, 4c) juxtaposées issues d'un découpage longitudinal d'une bande pâte laminée, **caractérisé en ce que** le convoyeur (1) présente au moins une structure principale (2) sensiblement plan et comprend une pluralité de lignes de course (3a, 3b, 3c) propres à chacune des bandelettes de pâte (4a, 4b, 4c) juxtaposées, au moins une des lignes de course (3a, 3b, 3c) comprenant un passage traversant (5a, 5b, 5c) du plan de la structure principale (2), le passage traversant (5a, 5b, 5c) étant de dimensions adaptées pour être traversé par la bandelette de pâte (4a) en déplacement sur la ligne de course (3a), et **en ce que** le convoyeur (1) comprend au moins une structure secondaire formant un élément de déviation (7) disposé sous le passage traversant (5a) d'au moins une des lignes de course (3a, 3b, 3c), l'élément de déviation (7) étant positionné à la verticale du passage traversant (5a) pour écarter la chute d'une bandelette de pâte (4a, 4b, 4c) de cette verticale.

2. Convoyeur (1, 1bis) selon la revendication 1, **caractérisé en ce que**, au moins deux lignes de course (3a) comprenant un passage traversant (5a, 5b) respectif du plan de la structure principale (2), les différents passages traversant du convoyeur (1) sont situés à des positions différentes sur le convoyeur (1).

3. Convoyeur (1) selon les revendications 1 et 2, **caractérisé en ce que** au moins une ligne de course (3a, 3b, 3c) est formée par des rouleaux ou galets (6) montés sur axes et arrangés pour participer au déplacement d'une bandelette de pâte (4a, 4b, 4c) et **en ce que** le passage traversant (5) d'au moins une des lignes de course (3a, 3b, 3c) est alors réalisé par l'absence d'un ou de plusieurs rouleaux ou galets le long de la ligne de course (3a, 3b, 3c).

4. Convoyeur (1, 1bis) selon les revendications 1 et 2, **caractérisé en ce que** au moins une ligne de course (3a, 3b, 3c) est formée par au moins un tapis transporteur arrangé pour participer au déplacement d'une bandelette de pâte (4a, 4b, 4c) et **en ce que** le passage traversant (5a, 5b) d'au moins une des lignes de course (3a, 3b, 3c) est alors réalisé par la fin de course (3a, 3b, 3c) du tapis transporteur.

5. Convoyeur (1, 1bis) selon une des revendications 1 à 4, **caractérisé en ce que** l'élément de déviation (7) est réalisé par une rampe dont l'angle d'inclinaison est montée mobile et réglable de sorte que la partie supérieure de la rampe est positionnée à la verticale du passage traversant (5a, 5b, 5c).

6. Convoyeur (1, 1bis) selon une des revendications 1 à 4, **caractérisé en ce que** l'élément de déviation (7) est réalisé par au moins un rouleau ou galet (7a) monté fou et dont la position est ajustable pour écarter la chute d'une bandelette de pâte (4a, 4b, 4c) de la verticale du passage traversant (5).

7. Système de gestion (9) de bandelettes de pâte (4a, 4b, 4c) issues d'un découpage longitudinal d'une bande de pâte laminée, **caractérisé en ce que** le système (9) comprend :
- un premier tapis transporteur (10) d'amenée de bandelettes de pâte (4a, 4b, 4c),
- un convoyeur (1, 1bis) selon une des revendications 1 à 6, la structure principale (2) du convoyeur (1, 1bis) étant positionnée en aval dans le prolongement et de niveau avec le premier tapis transporteur (10),
- un second tapis transporteur (8) de récupération de bandelettes de pâte (4a, 4b, 4c), le second tapis transporteur (8) étant positionné en dessous du convoyeur (1, 1bis) de sorte que le tapis transporteur (10) soit à la verticale d'au moins un passage traversant (5a, 5b, 5c) du plan de la structure principale (2) du convoyeur (1, 1bis).

8. Système de gestion (9) de bandelettes de pâte (4a, 4b, 4c) selon la revendication 7, **caractérisé en ce que** l'axe du second tapis transporteur (8) forme un angle non-nul par rapport à l'axe du convoyeur (1, 1bis) et/ou du premier tapis transporteur (10).

9. Système de gestion (9) de bandelettes de pâte (4a, 4b, 4c) selon une des revendications 7 ou 8, **caractérisé en ce que**, le convoyeur (1, 1bis) comprenant au moins une ligne de course (3a, 3b, 3c) sans passage traversant (5a, 5b, 5c) du plan de la structure principale (2) du convoyeur (1, 1bis), le système de gestion (9) comprend également un troisième tapis transporteur (11) positionné en aval dans le prolongement et de niveau avec la structure principale (2) du convoyeur (1, 1bis).

10. Système de gestion (9) de bandelettes de pâte (4a, 4b, 4c) selon la revendication 9, **caractérisé en ce que** le convoyeur (1, 1bis) comprend des lignes de course (3a, 3b, 3c) sans passage traversant et des lignes de course (3a, 3b, 3c) avec passage traversant (5a, 5b, 5c) alternativement juxtaposées.
